# EUROPÄISCHE PATENTSCHRIFT

(11) **EP 3 337 310 B1**
(45) Veröffentlichungstag und Bekanntmachung des Hinweises auf die Patenterteilung: **11.11.2020**
(21) Anmeldenummer: 15763501.2
(22) Anmeldetag: 17.08.2015
(51) Int. Cl.: A01G 9/14

(54) **ANLAGE ZUM KULTIVIEREN VON PFLANZEN**
SYSTEM FOR CULTIVATING PLANTS
INSTALLATION POUR CULTIVER DES PLANTES

(43) Veröffentlichungstag der Anmeldung: 27.06.2018
(73) Patentinhaber: Amminger, Thomas, 8075 Hart bei Graz (AT)
(72) Erfinder: Amminger, Thomas, 8075 Hart bei Graz (AT)
(74) Vertreter: Vossius & Partner Patentanwälte Rechtsanwälte mbB
(86) Internationale Anmeldenummer: PCT/EP2015/068867
(87) Internationale Veröffentlichungsnummer: WO 2017/028904

(56) Entgegenhaltungen:
- EP-A1- 2 712 517
- EP-A1- 2 904 894
- EP-A2- 0 142 643
- WO-A1-99/55139
- WO-A1-2013/113096

## Beschreibung

Die vorliegende Erfindung betrifft eine Anlage zum Kultivieren von Pflanzen, insbesondere nach Art eines Gewächs-, Glas- oder Treibhauses.

Es ist bekannt, z.B. an Orten mit ungeeigneten oder nicht optimalen klimatischen Verhältnissen zum Zwecke der Ertragssteigung, zur Ermöglichung des Anbaus bestimmter Kulturen oder zum Schutz vor extremen Witterungsverhältnissen Gewächshäuser zu verwenden. Dabei stehen häufig zwei Hauptaufgaben im Vordergrund. Zum einen sollen geeignete Wachstumsbedingungen wie Bodenbeschaffenheit, Bodenfeuchtigkeit und Raumklima (z.B. Beleuchtung, Luftfeuchtigkeit, Temperatur und Luftbewegung) geschaffen werden. Andererseits muss ein Gewächshaus so beschaffen sein, dass es den auftretenden statischen Belastungen entstehend durch den Aufbau und die Konstruktion des Gewächshauses selbst, durch die Bepflanzung und durch Umwelteinflüsse standhält.

Dazu weist ein herkömmliches Gewächshaus üblicher Weise ein auf einem Fundament ruhendes Tragwerk (z.B. aus Holz, Stahl oder Aluminium) auf. Auf diesem Tragwerk ist eine für Licht durchlässige Eindeckung aus Glasscheiben, Kunststofffolien (z.B. aus PVC oder PE) oder aus Kunststoffplatten (z.B. Kunststoffglas (PMMA), Polycarbonat, glasfaserverstärktem Polyester oder PVC) vorgesehen. Im Gewächshaus sind Kulturflächen für anzubauende Pflanzen bereitgestellt.

Hinsichtlich der Kulturflächen wird beispielsweise zwischen verschiedenen Beetformen, Tischen oder Hängekonstruktionen unterschieden. Das Bodenbeet hat Anschluss an den gewachsenen Boden, beim Grundbeet hingegen ist die kulturtragende Substratschicht vom gewachsenen Boden durch eine Sperrschicht aus Beton oder Folie getrennt. Beim Trogbeet ist das Kultursubstrat in Tröge aus zumeist Beton eingebracht, die Substratschicht hat somit auch in diesen keinen Anschluss an den gewachsenen Boden. Die Kultur auf Tischen findet Anwendung bei Topfpflanzen, wobei die Tische entweder feststehend oder zur besseren Raumausnutzung durch Entfall von Wegeflächenverschiebbar ausgeführt. Durch Hängevorrichtungen kann zwar die Nutzfläche durch Nutzung von Raum über den Beeten oder Tischen erhöht werden, allerdings gehen Hängevorrichtung mit einer Behinderung des Lichteinfalls auf tiefer gelegene Kulturflächen einher und die Kulturpflege ist umständlicher.

Viele Gewächshäuser sind überdies mit Vorrichtungen zur Lüftung zwecks Beeinflussung des Sauerstoff- und Kohlendioxidgehaltes der Gewächshausluft und zur Temperaturregelung ausgestattet. Anlagen zur Bewässerung bzw. Beregnung, Einrichtungen zur Beschattung oder Verdunkelung, Beleuchtungsanlagen zur künstlichen Beleuchtung von Kulturen, CO₂-Düngungsanlagen zur Kohlendioxiddüngung, Kraftwärmeanlagen sind weitere Ausstattungskomponenten von Gewächshäusern.

Da bei bekannten Gewächshäusern in erster Linie die Bodenflächen oder Pflanztische bzw. einfache Hänge- bzw. Regalkonstruktionen Verwendung finden, ist der Volumennutzungsgrad herkömmlicher Gewächshäuser gering.

Die WO99/55139 A1, EP 0 142 643 A2 und WO 2013/113096 A1 offenbaren teilweise automatisierte Gewächshäuser.

Der vorliegenden Erfindung liegt die Aufgabe zugrunde, Gewächshäuser besser nutzbar zu machen, insbesondere Gewächshäuser mit einem verbesserten Volumennutzungsgrad bereitzustellen, in denen vorzugsweise zusätzlich eine vereinfachte und verbesserte Kultivierung von Pflanzen gewährleistet wird. Diese Aufgabe wird mit den Merkmalen von Anspruch 1 gelöst. Bevorzugte Ausführungsformen sind in den abhängigen Ansprüchen definiert.

Die Erfindung geht dabei von dem Grundgedanken aus, eine Anlage bereitzustellen, die im Wesentlichen aus einer Kombination aus einem klassischen Gewächshaus und einem, vorzugsweise automatisch bedienbaren, Regal besteht. Dabei kommen besonders vorteilhafte kombinatorische Effekte zum Tragen, die den Volumennutzungsgrad von Gewächshäusern drastisch erhöhen und gleichzeitig den Personalaufwand zur Kultivierung von Pflanzen sowie zur Ernte erheblich reduzieren. Der Volumennutzungsgrad wird dadurch erhöht, dass anstelle der üblicher Weise vorgesehen Bodenbepflanzung oder Pflanztische im Gewächshaus ein verhältnismäßig dicht angeordnetes Regalsystem zum Einsatz kommt. Dieses Regalsystem weist mehrere Längs- und Querreihen sowie mehrere Ebenen auf. Ferner wird das Traggestell des Regalsystems selbst als Tragwerk für das Gewächshaus genutzt.

Die vorliegende Erfindung betriff gemäß den beigefügten Ansprüchen ein Gewächshaus mit einem Tragwerk und einer lichtdurchlässigen Eindeckung, wobei die Eindeckung das Gewächshaus nach außen begrenzt und durch das Tragwerk gestützt wird, und einem Regalsystem, das eine Anordnung von Regalen mit mehreren Ebenen aufweist. Die Regale sind derart angeordnet, dass zwischen gegenüberliegenden Regalen Regalgassen in Längsrichtung und zwischen nebeneinander angeordneten Regalen Regalgassen in Querrichtung gebildet sind. Das Tragwerk des Gewächshauses ist dabei vollständig durch das Regalsystem bereitgestellt, d.h. das eigentliche Gewächshaus bzw. die lichtdurchlässige Eindeckung weist kein eigenes Tragwerk auf, sondern stützt sich einzig auf das Regalsystem. Das Regalsystem ist ein automatisch bedienbares Regalsystem und weist mindestens ein in den in Längs- und Querrichtung angeordneten Regalgassen frei verfahrbares Regalfahrzeug auf, mit dem Pflanzgut in einen Lagerplatz im Regalsystem einstellbar oder daraus herausholbar ist.

Die Regale sind derart angeordnet sind, dass Regalgassen in Längsrichtung und Querrichtung gebildet werden, dabei können einfach und/oder mehrfach tiefe Regale zwischen benachbarten Regalgassen vorgesehen sein.

Ein automatisch bedienbares Regalsystem wird mit mindestens einem Regalfahrzeug eingesetzt, wobei das Regalfahrzeug z.B. Pflanzgut in einen Lagerplatz im Regalsystem einstellen oder daraus herausholen kann. Das Regalfahrzeug kann auch zu Inspektionszwecken, beispielsweise zur Kontrolle von Schädlingsbefall, Messung des Feuchtigkeitsgrads, Feststellung des Reifegrads von Früchten etc., und/oder zur Durchführung von Arbeitsschritten verwendet werden.

Die erfindungsgemäßen Gewächshäuser können ferner mindestens eine Hubeinrichtung aufweisen, mit der das mindestens eine Regalfahrzeug zwischen verschiedenen Ebenen des Regalsystems transportierbar ist, oder wobei das mindestens eine Regalfahrzeug ausgelegt ist, selbst von einer Regalebene in eine andere Ebene zu wechseln.

Außerdem kann vorzugsweise in den erfindungsgemäßen Gewächshäusern ferner ein Arbeitsbereich im Gewächshaus vorgesehen sein, zu und von dem Pflanzgut aus den Regalen des Regalsystems mit dem mindestens einen Regalfahrzeug transportierbar ist.

Das mindestens eine Regalfahrzeug kann vorzugsweise derart ausgebildet sein, dass das Pflanzgut nicht zu jeder Aktion aus dem Regal entnommen werden muss, sondern Arbeiten automatisch am Pflanzgut verrichtet werden können.

Ferner können die erfindungsgemäßen Gewächshäuser mit einer Einrichtung oder mehreren Einrichtungen ausgestattet sein, die dafür sorgt bzw. sorgen, dass Pflanzgut aus den jeweiligen Regalen an andere Stellen im Gewächshaus verbracht wird, um dem Pflanzgut unter anderem ausreichend Licht, Wasser und/oder Dünger zukommen zu lassen.

Durch die automatische, vorzugsweise computergesteuerte, Bedienung des Regalsystems können alle im Gewächshaus anfallenden Arbeiten, vom Säen bis zur Ernte wesentlich erleichtert werden. Beispielsweise können Pflanzen für die anfallenden Tätigkeiten automatisch (z.B. auf Anforderung) zu ergonomischen Arbeitsplätzen verbracht werden. Dadurch kann einerseits anstrengende Arbeit, die üblicher Weise am Boden verrichtet werden muss, in angenehmer Arbeitshöhe erledigt werden und andererseits kann der Einsatz von stationären Automaten oder Robotern z.B. zum Pflanzen oder Ernten oder zur Begutachtung von Pflanzen erfolgen, wodurch eine höhere Wirtschaftlichkeit gegenüber konventionellen Gewächshäusern erreicht wird.

Die Ausbildung des Regalsystems erfolgt also vorzugsweise derart, dass das Regalsystem sowohl in Längs- als auch in Querrichtung von einem oder mehreren Regalfahrzeugen befahren werden kann. Zusätzlich kann eine oder können mehrere Hubeinrichtung(en) vorgesehen sein, mit der bzw. mit denen Regalfahrzeuge zwischen verschiedenen Ebenen des Regalsystems bewegt werden können. Alternativ dazu können die Regalfahrzeuge selbst von einer Regalebene in eine andere Ebene wechseln.

Entsprechend einer Ausführungsform der vorliegenden Erfindung sind insbesondere Regalsysteme, wie beispielsweise in der WO 2005/118436 A1 beschrieben für die vorliegende Erfindung vorteilhaft einsetzbar. Mit einem derartigen System können die Regalfahrzeuge jeden Stellplatz im Regal erreichen, wodurch eine beliebig große Anzahl an Regalstellplätzen z.B. nur durch wenige Regalfahrzeuge bedient werden kann.

Die erfindungsgemäßen Anlagen bzw. Gewächshäuser können grundsätzlich beliebige Ausdehnungen und Formen annehmen. Es sind auch hohe Gewächshäuser, d.h. mehrstöckige Gewächshäuser, mit hohem Volumennutzungsgrad realisierbar. Als für Licht durchlässige Eindeckung können sämtliche üblichen Materialien verwendet werden, z.B. Glasscheiben, Kunststofffolien (z.B. aus PVC oder PE) oder Kunststoffplatten (z.B. Kunststoffglas (PMMA), Polycarbonat, glasfaserverstärktem Polyester oder PVC).

Die erfindungsgemäßen Gewächshauser können ferner beispielsweise im Bereich des Regals, direkt im Regal und/oder zentral Installationen zur Schaffung von geeigneten Umgebungsbedingungen für eine Verbesserung des Wachstums und des Ertrages der Pflanzen aufweisen.

Nachfolgend wird eine Ausführungsform eines erfindungsgemäßen Gewächshauses beispielhaft anhand der Figuren beschrieben. Es zeigen:
Figur 1 zeigt eine schematische Draufsicht auf das Regalsystem im Inneren einer Ausführungsform eines erfindungsgemäßen Gewächshauses; und
Figur 2 zweigt eine schematische Seitenansicht des Gewächshauses gemäß Figur 1.

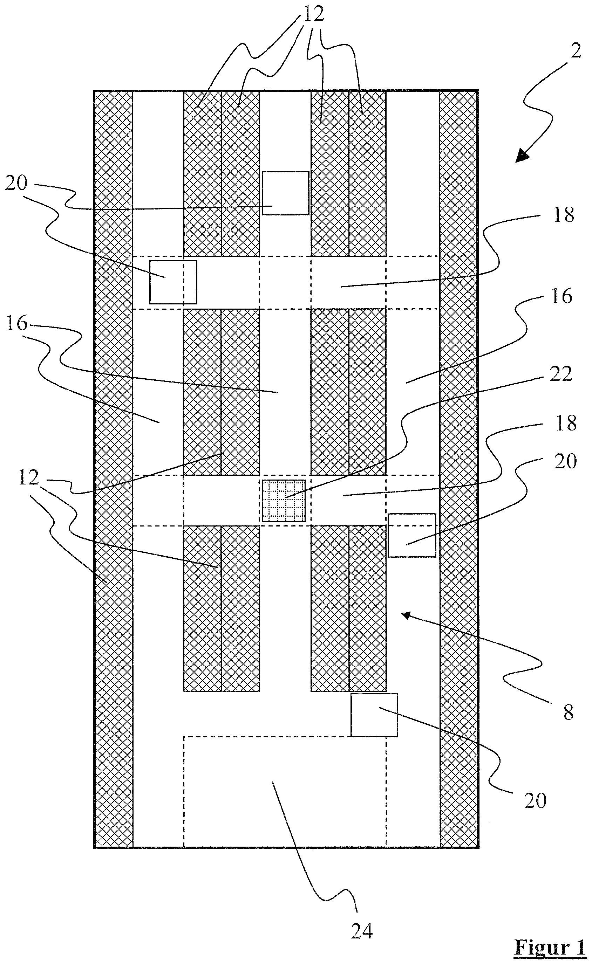

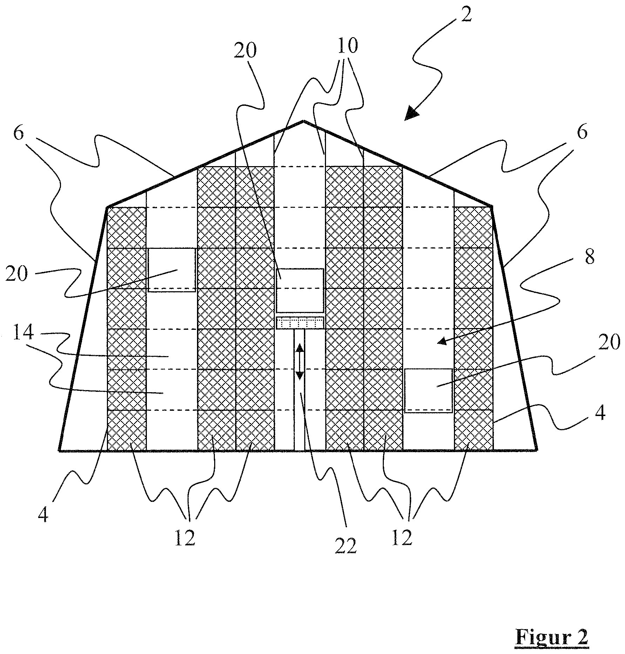

Das in den Figuren 1 und 2 gezeigte Gewächshaus 2 hat ein Tragwerk 4 und eine lichtdurchlässige Eindeckung 6. Die Eindeckung 6 begrenzt das Gewächshaus 2 in im Wesentlichen herkömmlicher Weise nach außen. Sie ist aus einem für Licht durchlässige Material gebildet, beispielsweise aus Glasscheiben, Kunststofffolien (z.B. aus PVC oder PE) oder Kunststoffplatten (z.B. Kunststoffglas (PMMA), Polycarbonat, glasfaserverstärktem Polyester oder PVC). Im Gewächshaus 2 ist ein Regalsystem 8 vorgesehen, das gleichzeitig das Tragwerk 4 für das Gewächshaus bilden kann. Das durch das Regalsystem 8 bereitgestellte Tragwerk 4 muss dabei nicht, wie bei herkömmlichen Gewächshäusern ohne oder mit einer minimalen Anzahl von Stützen auskommen, sondern kann durch die Verwendung der Regalständer bzw. -stützen als statische Elemente wesentlich flexibler und günstiger konstruiert werden. Es kann eine Vielzahl von Stützen verwendet werden, ohne die Nutzbarkeit des Gewächshauses einzuschränken, da das Regalsystem selbst ohnehin Regalständer aufweist. Diese werden beispielsweise einfach bis zur Dachkonstruktion verlängert, wie anhand der Bezugszeichen 10 in Figur 2 angedeutet, um die Eindeckung 6 des Gewächshauses 2 zu tragen. Damit ist das Regalsystem 8 praktisch der tragende Teil des Gewächshauses 2.

Das Regalsystem 8 weist eine Anordnung von Regalen 12 auf und definiert mehrere Ebenen 14. Die Regale 12 sind derart angeordnet, dass sie Regalgassen, vorzugsweise Längsgassen 16 und Quergassen 18, bilden. Die Längs- und Quergassen 16, 18 sind vorzugsweise rechtwinklig zueinander angeordnet. Während in der dargestellten Ausführungsform einfach tiefe Regale 12 gezeigt sind, können im Rahmen der Erfindung auch mehrfach tiefe Regale zwischen benachbarten Regalgassen vorgesehen sein.

Das Regalsystem 8 ist ein automatisch bedienbares Regalsystem mit mindestens einem Regalfahrzeug 20. In den Figuren 1 und 2 sind drei solcher Regalfahrzeuge schematisch dargestellt. Gemäß einer Ausführungsform der Erfindung ist das Regalsystem 8 entsprechend der WO 2005/118436 A1 ausgebildet und ist erfindungsgemäß über autonom fahrende Regalfahrzeuge 20 verfügen, die frei zwischen den verschiedenen Längs- und Quergassen 16, 18 verfahren können. Die Regalfahrzeuge 20 sind derart ausgelegt, im Gewächshaus 2 verschiedene Aufgaben zum Kultivieren von Pflanzen zu übernehmen. Insbesondere kann es von Bedeutung sein Pflanzen in bestimmten Zeitabständen umzupositionieren, um beispielsweise dafür zu sorgen, dass alle Pflanzen genug Licht erhalten. Die Regalfahrzeuge 20 sind dafür insbesondere dafür ausgelegt, Pflanzgut in einen Lagerplatz im Regalsystem 8 einzustellen oder daraus herauszuholen. Das Regalfahrzeug 20 zusätzlich oder alternativ dazu auch zu Inspektionszwecken, beispielsweise zur Kontrolle von Schädlingsbefall, Messung des Feuchtigkeitsgrads, Feststellung des Reifegrads von Früchten etc., und/oder zur Durchführung von Arbeitsschritten (z.B. Drehen der Pflanzen) verwendet werden. Auch unterschiedliche Regalfahrzeuge 20 können zum Einsatz kommen, wobei mit ihnen verschiedene Aufgaben bewerkstelligt werden können.

Die erfindungsgemäßen Gewächshäuser 20 können ferner mindestens eine Hubeinrichtung 22 aufweisen, mit der Regalfahrzeuge 20 zwischen verschiedenen Ebenen 14 des Regalsystems 8 hinauf bzw. herabgefahren werden können. Dies kann beispielsweise nach Art eines Aufzugs realisiert werden. Alternativ können die Regalfahrzeuge 20 selbst so beschaffen sein, dass sie von einer Regalebene 14 in eine andere Ebene 14 wechseln können.

Außerdem kann vorzugsweise in den erfindungsgemäßen Gewächshäusern 2 ferner mindestens ein Arbeitsbereich 24 vorgesehen sein, zu und von dem Pflanzgut aus den Regalen 12 des Regalsystems 8 mit den Regalfahrzeugen 20 transportierbar ist. An einem solchen Arbeitsbereich 24 können manuell oder automatisch (z.B. mit Hilfe von Robotern) verschiedenste Tätigkeiten durchgeführt werden. Dazu verbringen die Regalfahrzeuge 20 das Pflanzgut zum Arbeitsbereich 24 und stellen es dort ab. Vorzugsweise wird unmittelbar anschließend bereits bearbeitetes Pflanzgut aufgenommen und an einen geeigneten Standort im Regalsystem 8 befördert.

Die Erfindung stellt somit ein Gewächshaus bereit, bei dem die Vorteile eines traditionellen Gewächshauses mit denen automatisch bedienbarer Regalsysteme kombiniert werden. Dabei werden besonders vorteilhafte kombinatorische Effekte erzielt, die den Volumennutzungsgrad von Gewächshäusern drastisch erhöhen, gleichzeitig den Personalaufwand zur Kultivierung von Pflanzen sowie zur Ernte erheblich reduzieren, die Konstruktion von Gewächshäusern erleichtern und Gewächshäuser vor allem auch in geographischen Lagen wirtschaftlich nutzbar machen, wo sie sonst nicht eingesetzt werden könnten.

Durch die automatische, vorzugsweise computergesteuerte, Bedienung des Regalsystems 8 können alle im Gewächshaus 2 anfallenden Arbeiten, vom Säen bis zur Ernte wesentlich erleichtert werden. Beispielsweise können Pflanzen für die anfallenden Tätigkeiten automatisch (z.B. auf Anforderung) zu ergonomischen Arbeitsplätzen 24 verbracht werden. Dadurch kann einerseits anstrengende Arbeit, die üblicher Weise am Boden verrichtet werden muss, in angenehmer Arbeitshöhe erledigt werden und andererseits kann der Einsatz von stationären Automaten oder Robotern z.B. zum Pflanzen oder Ernten oder zur Begutachtung von Pflanzen erfolgen, wodurch eine höhere Wirtschaftlichkeit gegenüber konventionellen Gewächshäusern erreicht wird.

## Patentansprüche

1. Gewächshaus (2) mit:
einem Tragwerk (4) und einer lichtdurchlässigen Eindeckung (6), wobei die Eindeckung das Gewächshaus nach außen begrenzt und durch das Tragwerk gestützt wird; und
einem Regalsystem (8), das eine Anordnung von Regalen (12) mit mehreren Ebenen (14) aufweist, wobei die Regale (12) derart angeordnet sind, dass zwischen gegenüberliegenden Regalen Regalgassen (16) in Längsrichtung und zwischen nebeneinander angeordneten Regalen Regalgassen (18) in Querrichtung gebildet sind, wobei das Tragwerk (4) des Gewächshauses (2) durch das Regalsystem (8) gebildet ist, wobei das Regalsystem (12) ein automatisch bedienbares Regalsystem ist und mindestens ein in den in Längs- und Querrichtung angeordneten Regalgassen frei verfahrbares und autonomes Regalfahrzeug (20) aufweist, mit dem Pflanzgut in einen Lagerplatz im Regalsystem (12) einstellbar oder daraus herausholbar ist.

2. Gewächshaus nach Anspruch 1, wobei die Regale (12) derart angeordnet sind, dass Regalgassen (16, 18) in Längsrichtung und Querrichtung gebildet werden, wobei einfach und/oder mehrfach tiefe Regale (12) zwischen benachbarten Regalgassen (16) vorgesehen sind.

3. Gewächshaus nach Anspruch 1 oder 2, wobei das Regalsfahrzeug ein führerloses Regalfahrzeug (20) ist.

4. Gewächshaus nach einem der Ansprüche 1 bis 3, wobei ferner mindestens eine Hubeinrichtung (22) vorgesehen ist, mit der das mindestens eine Regalfahrzeug (20) zwischen verschiedenen Ebenen (14) des Regalsystems (12) transportierbar ist, oder wobei das mindestens eine Regalfahrzeug (20) ausgelegt ist, selbst von einer Regalebene (14) in eine andere Ebene (14) zu wechseln.

5. Gewächshaus nach einem der Ansprüche 1 bis 4, wobei ferner ein Arbeitsbereich (24) im Gewächshaus (2) vorgesehen ist, zu und von dem Pflanzgut aus den Regalen (12) des Regalsystems (8) mit dem mindestens einen Regalfahrzeug (20) transportierbar ist.

6. Gewächshaus nach einem der Ansprüche 1 bis 5, wobei das mindestens eine Regalfahrzeug (20) derart ausgebildet ist, dass das Pflanzgut nicht zu jeder Aktion aus dem Regal (12) entnommen werden muss, sondern Arbeiten automatisch am Pflanzgut verrichtet werden können.

7. Gewächshaus nach einem der Ansprüche 1 bis 6, ferner mit einer Einrichtung, die dafür sorgt, dass Pflanzgut aus den jeweiligen Regalen (12) an andere Stellen im Gewächshaus (2) verbracht wird, um dem Pflanzgut unter anderem ausreichend mit Licht, Wasser und/oder Dünger zukommen zu lassen.

## Claims

1. A greenhouse (2) comprising:
a supporting structure (4) and a translucent roofing (6), wherein the roofing limits the greenhouse to the outside and is supported by the supporting structure; and
a shelf system (8) comprising an arrangement of shelves (12) with a plurality of planes (14), wherein the shelves (12) are arranged such that shelf aisles (16) are formed between opposing shelves in the longitudinal direction and shelf aisles (18) are formed between shelves arranged next to each other in the transverse direction, wherein the supporting structure (4) of the greenhouse (2) is formed by the shelf system (8), wherein the shelf system (12) is an automatically operable shelf system and comprises at least one autonomous shelf vehicle (20) which is freely movable in the shelf aisles arranged in the longitudinal and transverse directions and by means of which seed stock may be put into a storage place in the shelf system (12) or fetched therefrom.

2. The greenhouse according to claim 1, wherein the shelves (12) are arranged such that shelf aisles (16, 18) are formed in the longitudinal direction and the transverse direction, wherein shelves (12) of single and/or multiple depths are provided between adjacent shelf aisles (16).

3. The greenhouse according to claim 1 or 2, wherein the shelf vehicle is a driverless shelf vehicle (20).

4. The greenhouse according to any one of claims 1 to 3, wherein further at least one lifting equipment (22) is provided by means of which the at least one shelf vehicle (20) may be transported between different planes (14) of the shelf system (12), or wherein the at least one shelf vehicle (20) is designed to switch from one shelf plane (14) to another plane (14) by itself.

5. The greenhouse according to any one of claims 1 to 4, wherein further a work area (24) is provided in the greenhouse (2), with seed stock from the shelves (12) of the shelf system (8) being able to be transported to and from said work area with the help of the at least one shelf vehicle (20).

6. The greenhouse according to any one of claims 1 to 5, wherein the at least one shelf vehicle (20) is configured such that the seed stock does not have to be taken out of the shelf (12) for every operation, but that work may rather be done automatically on the seed stock.

7. The greenhouse according to any one of claims 1 to 6, further with a means for moving seed stock from the respective shelves (12) to different places in the greenhouse (2) in order for the seed stock to be provided with, inter alia, sufficient light, water, and/or fertilizer.

## Revendications

1. Serre (2), comprenant :
une ossature porteuse (4) et une couverture transparente (6), la couverture limitant la serre vers l'extérieur et étant soutenue par l'ossature porteuse ; et
un système d'étagères (8), qui comporte un ensemble d'étagères (12) avec plusieurs niveaux (14), les étagères (12) étant agencées de telle manière que des allées (16) sont formées dans le sens longitudinal entre des étagères disposées les unes en face des autres et des allées (18) sont formées dans le sens transversal entre des étagères agencées les unes à côtés des autres,
l'ossature porteuse (4) de la serre (2) étant formée par le système d'étagères (8),
le système d'étagères (12) étant un système d'étagères à fonctionnement automatique et comportant au moins un transstockeur (20) autonome et déplaçable librement dans les allées agencées dans le sens longitudinal et transversal, au moyen duquel des plants peuvent être placés dans un emplacement de stockage dans le système d'étagères (12) ou retirés de celui-ci.

2. Serre selon la revendication 1, dans laquelle les étagères (12) sont agencées de telle manière que des allées (16, 18) sont formées dans le sens longitudinal et le sens transversal, des étagères (12) de profondeur simple et/ou multiple étant prévues entre des allées (16) adjacentes.

3. Serre selon la revendication 1 ou 2, dans laquelle le transstockeur est un transstockeur (20) sans conducteur.

4. Serre selon l'une des revendications 1 à 3, dans laquelle au moins un dispositif de levage (22) est en outre prévu, au moyen duquel l'au moins un transstockeur (20) peut être transporté entre différents niveaux (14) du système d'étagères (12), ou dans laquelle l'au moins un transstockeur (20) est conçu pour passer de lui-même d'un niveau d'étagère (14) à un autre niveau (14).

5. Serre selon l'une des revendications 1 à 4, dans laquelle une zone de travail (24) est en outre prévue dans la serre (2), vers laquelle et depuis laquelle des plants peuvent être transportés depuis les étagères (12) du système d'étagères (8) et jusqu'à celles-ci avec l'au moins un transstockeur (20).

6. Serre selon l'une des revendications 1 à 5, dans laquelle l'au moins un transstockeur (20) est réalisé de telle manière que les plants ne doivent pas être retirés de l'étagère (12) pour chaque action, mais que des travaux peuvent être accomplis automatiquement sur les plants.

7. Serre selon l'une des revendications 1 à 6, comprenant en outre un dispositif qui permet de transférer les plants depuis les étagères (12) respectives dans d'autres endroits de la serre (2), pour fournir aux plants entre autres suffisamment de lumière, d'eau et/ou d'engrais.
